# EUROPEAN PATENT APPLICATION

(11) **EP 3 606 291 A1**
(43) Date of publication of application: **05.02.2020**
(21) Application number: 19189313.0
(22) Date of filing: 31.07.2019
(51) Int. Cl.: H05B 33/08

(54) **CONTROL CIRCUIT WITH ADJUSTABLE LED COLOR TEMPERATURE**

(30) Priority: 31.07.2018 CN 201810858577
(71) Applicant: HANGZHOU HUNTER ELECTRIC CO. LTD, Gaohong Town Linan City Zhejiang (CN)
(72) Inventor: XIONG, Xianwen, Shenzhen, Guangdong (CN)
(74) Representative: Patentanwälte Gierlich & Pischitzis Partnerschaft mbB

(57) **Abstract**

The present invention discloses a control circuit with adjustable LED color temperature, characterized in that the control circuit with adjustable LED color temperature comprises a rectifier circuit, a filter circuit, a voltage division circuit, an optical coupling circuit, a constant current control circuit, a power supply circuit for supplying power for the constant current control circuit, an output filter circuit, a voltage stabilizing diode, an eighteenth resistor, a nineteenth resistor, a twentieth resistor, a ninth capacitor and a triode; an output end of the rectifier circuit is connected with an input end of the filter circuit; an output end of the filter circuit is divided into two paths; one path is connected with an input end of the voltage division circuit, and the other path is connected with an input end of the constant current control circuit. The circuit of the present invention is simple and easy to realize. An LED lamp is composed of a plurality of first LED lamp beads that generate bright white light and a plurality of second LED lamp beads that generate warm color light. The color temperature of the lamp is changed to provide a warm and soft light environment and ensure that the brightness of the lamp is unchanged.

## Description

### Technical Field

The present invention relates to a control circuit, in particular to a control circuit with adjustable LED color temperature.

### Background

LED lighting gradually replaces traditional incandescent lamps and energy-saving lamps because of its advantages of energy saving, long life and no pollution. A Triac dimmer which is common on the current market is used together with the traditional incandescent lamps. The Triac dimmer is the abbreviation of a triode AC semiconductor switch dimmer, and its principle is that the conduction angle of a thyristor is controlled by adjusting an internal delay circuit of the Triac dimmer. The larger the conduction angle is, the longer the conduction time is and the more the energy with higher brightness output provided for the incandescent lamps is. The illumination principle of the incandescent lamps is that tungsten wires generate heat radiation through current and emit visible light. The tungsten wires are equivalent to pure resistive loads. Therefore, the Triac dimmer is especially suitable for the incandescent lamps, and users can adjust the brightness output as needed. Due to the characteristics of thermal radiation, when the brightness output of the incandescent lamps is gradually reduced, the color temperature of the incandescent lamps will be reduced from 2700 Kelvin to about 2000 Kelvin which is close to the color temperature at sunset.

With the progress of the technology, LED lamps are compatible with traditional Triac dimmers currently and achieve smooth and linear brightness adjustment like the incandescent lamps. However, due to the light-emitting characteristics of the LED, the color temperature of the LED lamps does not change with the change of the driver current. In order to achieve the color temperature change similar to the incandescent lamps, two or more different color temperature LED chips are generally used, such as 3000 Kelvin and 2000 Kelvin. With the distribution of the driver current, the LED can be used to adjust the brightness output and the color temperature change synchronously with the Triac dimmer. The correlated color temperature of the LED light source is scaled by (CCT). The higher the CCT is, the brighter the light ray is and the closer the light ray is to the color temperature at the noon sunshine. The lower the CCT is, the closer the light ray is to the color temperature at sunrise and sunset. Scientific research shows that bright light rays may irritate human senses and may damage human health, and especially when exposed to the bright light rays at night, people may have jet lag and poor sleep and other adverse conditions, such as hormone secretion disorder, may also be caused.

Therefore, there is an urgent need to provide a dimmable LED light source that produces variable colors from white to amber, simultaneously maintains sufficient brightness and creates a warm, comfortable and relaxing light ray environment for dining, for example at a dining table or before a computer, and working at night.

### Summary

A technical problem to be solved by the present invention is to provide a control circuit with adjustable LED color temperature, so as to change color temperature of an LED light source, maintain the brightness unchanged and keep the brightness enough all the time.

To solve the above technical problem, the present invention adopts the following technical solution:
The present invention discloses a control circuit with adjustable LED color temperature, characterized in that the control circuit with adjustable LED color temperature comprises a rectifier circuit, a filter circuit, a voltage division circuit, an optical coupling circuit, a constant current control circuit, a power supply circuit for supplying power for the constant current control circuit, an output filter circuit, a voltage stabilizing diode, an eighteenth resistor, a nineteenth resistor, a twentieth resistor, a ninth capacitor and a triode; an output end of the rectifier circuit is connected with an input end of the filter circuit; an output end of the filter circuit is divided into two paths; one path is connected with an input end of the voltage division circuit, and the other path is connected with an input end of the constant current control circuit; an output end of the voltage division circuit is connected with a positive electrode of the voltage stabilizing diode; a negative electrode of the voltage stabilizing diode is connected with an input end of the optical coupling circuit; an input end of the optical coupling circuit is connected with the eighteenth resistor and the ninth capacitor; the twentieth resistor is connected between two output ends of the optical coupling circuit; the output ends of the optical coupling circuit are also connected with the nineteenth resistor and a base electrode of the triode; an emitting electrode of the triode is connected with a negative output end of the optical coupling circuit; an output end of the constant current control circuit is connected with an input end of the output filter circuit; first LED lamp bead are connected between two output ends of the output filter circuit; and second LED lamp beads are connected between the output ends of the output filter circuit and a collecting electrode of the triode.

Preferably, the filter circuit comprises a fourth capacitor, an inductor, a fifteenth resistor, a fifth capacitor, a first resistor, a second resistor and a sixth capacitor; one end of the fourth capacitor is connected with one end of the inductor and one end of the fifteenth resistor in parallel; the other end of the fourth capacitor is connected with one end of the first resistor, one end of the second resistor and one end of the sixth capacitor in parallel; the other end of the first resistor and the other end of the second resistor are simultaneously connected with one end of the fifth capacitor; the other end of the fifteenth resistor, the other end of the inductor, the other end of the fifth capacitor and the other end of the sixth capacitor are connected with the output ends of the filter circuit in parallel.

Preferably, the constant current control circuit comprises a constant current control chip; a first pin of the constant current control chip is connected with the power supply circuit, one end of the twelfth resistor and one end of the third capacitor; the other end of the twelfth resistor is connected with the output filter circuit; a second pin of the constant current control chip is connected with one end of the seventh resistor; a third pin of the constant current control chip is respectively connected with a positive electrode of a first diode and one end of the second capacitor; a negative electrode of the first diode is respectively connected with one end of the fifth resistor, one end of the sixth resistor and one end of the first capacitor; the other end of the fifth resistor is connected with the input end of the constant current control circuit; a fourth pin of the constant current control chip is grounded; a fifth pin of the constant current control chip is respectively connected with one end of the ninth resistor and one end of the eleventh resistor; a sixth pin of the constant current control chip is connected with one end of the third resistor and one end of the fourth resistor in parallel; the other end of the third resistor and the other end of the fourth resistor are simultaneously grounded; and the other end of the sixth resistor, the other end of the first capacitor, the other end of the third capacitor, the other end of the seventh resistor and the other end of the second capacitor are grounded.

Preferably, the power supply circuit comprises a third diode, a fourteenth resistor, a thirteenth resistor, a fourth diode and a second polar capacitor; positive electrodes of the third diode, the fourteenth resistor, the thirteenth resistor and the fourth diode are connected in sequence; a negative electrode of the fourth diode is connected with the first pin of the constant current control chip; a positive electrode of the second polar capacitor is connected between the fourteenth resistor and the thirteenth resistor; and a negative electrode of the second polar capacitor is grounded.

Preferably, the output filter circuit comprises a second diode, a tenth resistor and a first polar capacitor; a negative electrode of the second diode is respectively connected with one end of the tenth resistor and the positive electrode of the first polar capacitor; and the other end of the tenth resistor and a negative electrode of the first polar capacitor are connected with the negative electrode ends of the first LED lamp beads in parallel.

### The present invention has the following beneficial effects:

The circuit of the present invention is simple and easy to realize. An LED lamp is composed of a plurality of first LED lamp beads that generate bright white light and a plurality of second LED lamp beads that generate warm color light. The lamp comprises a control circuit used for receiving a dimming input voltage signal from a dimmer switch, wherein when the dimmer switch is adjusted within the top range setting of the dimmer switch, the color temperature of the lamp is changed to provide a warm and soft light environment and ensure that the brightness of the lamp is unchanged.

### Description of Drawings

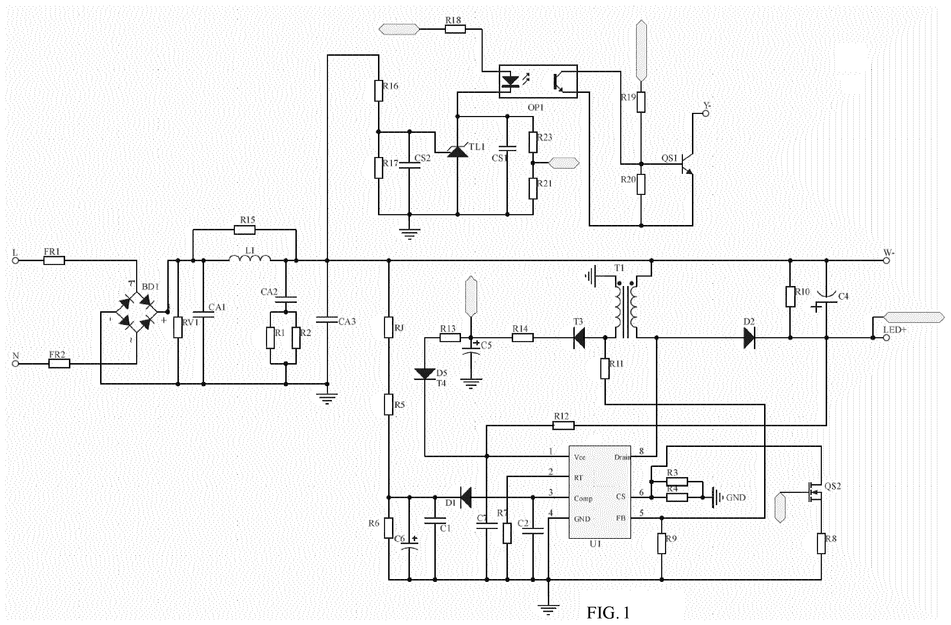

Fig. 1 is a schematic diagram of an entire circuit structure of a preferred embodiment of the present invention.

### Detailed Description

The specific embodiments of the present invention will be further described below in conjunction with the drawings.

With reference to Fig. 1, a control circuit with adjustable LED color temperature comprises a rectifier circuit, a filter circuit, a voltage division circuit, an optical coupling circuit, a constant current control circuit, a power supply circuit for supplying power for the constant current control circuit, an output filter circuit, a voltage stabilizing diode TL1, an eighteenth resistor R18, a nineteenth resistor R19, a twentieth resistor R20, a ninth capacitor CS3 and a triode QS1. A voltage input end of the rectifier circuit may be connected with a resistor FR1 and a resistor FR2. An output end of the rectifier circuit is connected with an input end of the filter circuit; an output end of the filter circuit is divided into two paths; one path is connected with an input end of the voltage division circuit, and the other path is connected with an input end of the constant current control circuit, wherein an output end of the voltage division circuit is connected with a positive electrode of the voltage stabilizing diode TL1; a negative electrode of the voltage stabilizing diode TL1 is connected with an input end of the optical coupling circuit; the voltage stabilizing diode TL1 is connected with a seventh capacitor CS1 in parallel; an input end of the optical coupling circuit is also connected with one end of the eighteenth resistor R18 and one end of the ninth capacitor CS3; the other end of the eighteenth resistor R18 is connected with a power supply; the other end of the ninth capacitor CS3 is grounded; and the seventh capacitor CS1 and the ninth capacitor CS3 are used for filtering high frequency of the power supply. The twentieth resistor R20 is connected between the output ends of the optical coupling circuit; the output ends of the optical coupling circuit are also connected with the nineteenth resistor R19 and a base electrode of the triode QS1; and an emitting electrode of the triode QS1 is connected with the output end of the optical coupling circuit. The nineteenth resistor R19 and the twentieth resistor R20 provide base electrode bias voltage for the triode QS1. An output end of the constant current control circuit is connected with an input end of the output filter circuit; the output ends of the output filter circuit are connected with the first LED lamp beads; and the output ends of the output filter circuit and a collecting electrode of the triode QS1 are directly connected with the second LED lamp beads, wherein a plurality of LED lamp beads that generate bright white light are selected as the first LED lamp beads, and a plurality of second LED lamp beads that generate warm color light are selected as the second LED lamp beads.

The filter circuit may comprise a fourth capacitor CA1, an inductor L1, a fifteenth resistor R15, a fifth capacitor CA2, a first resistor R1, a second resistor R2 and a sixth capacitor CA3; one end of the fourth capacitor CA1 is connected with one end of the inductor L1 and one end of the fifteenth resistor R15 in parallel; the other end of the fourth capacitor CA1 is connected with one end of the first resistor R1, one end of the second resistor R2 and one end of the sixth capacitor CA3 in parallel; the other end of the first resistor R1 and the other end of the second resistor R2 are simultaneously connected with one end of the fifth capacitor CA2; the other end of the fifteenth resistor R15, the other end of the inductor L1, the other end of the fifth capacitor CA2 and the other end of the sixth capacitor CA3 are connected with the output ends of the filter circuit in parallel.

The constant current control circuit may comprise a constant current control chip U1; a first pin 1 of the constant current control chip U1 is connected with the power supply circuit, one end of the twelfth resistor R12 and one end of the third capacitor C7; the other end of the twelfth resistor R12 is connected with the output filter circuit; a second pin 2 of the constant current control chip U1 is connected with one end of the seventh resistor R7; a third pin 3 of the constant current control chip is respectively connected with a positive electrode of a first diode D1 and one end of the second capacitor C2; a negative electrode of the first diode D1 is respectively connected with one end of the fifth resistor R5, one end of the sixth resistor R6 and one end of the first capacitor C1; the other end of the fifth resistor R5 is connected with the input end of the constant current control circuit; a fourth pin 4 of the constant current control chip U1 is grounded; a fifth pin 5 of the constant current control chip U1 is respectively connected with one end of the ninth resistor R9 and one end of the eleventh resistor R11; a sixth pin of the constant current control chip U1 is connected with one end of the third resistor R3 and one end of the fourth resistor R4 in parallel; the other end of the third resistor R3 and the other end of the fourth resistor R4 are simultaneously grounded; and the other end of the sixth resistor R6, the other end of the first capacitor C1, the other end of the third capacitor C7, the other end of the seventh resistor R7 and the other end of the second capacitor C2 are grounded, wherein the constant current control chip U1 may be a common chip on the market, and is not specially required.

The power supply circuit may comprise a third diode T3, a fourteenth resistor R14, a thirteenth resistor R13, a fourth diode D5 and a second polar capacitor C5; positive electrodes of the third diode T3, the fourteenth resistor R14, the thirteenth resistor R13 and the fourth diode D5 are connected in sequence; a negative electrode of the fourth diode D5 is connected with the first pin 1 of the constant current control chip U1; a positive electrode of the second polar capacitor C5 is connected between the fourteenth resistor R14 and the thirteenth resistor R13; and a negative electrode of the second polar capacitor C5 is grounded.

The output filter circuit comprises a second diode D2, a tenth resistor R10 and a first polar capacitor C4; a negative electrode of the second diode D2 is respectively connected with one end of the tenth resistor R10 and the positive electrode of the first polar capacitor C4; and the other end of the tenth resistor R10 and a negative electrode of the first polar capacitor C4 are connected with the negative electrode ends of the first LED lamp beads in parallel. The output filter circuit is used for filtering high frequency and low frequency components of a switch.

The voltage division circuit formed by the sixteenth resistor R16, the seventeenth resistor R1 and the eighth capacitor CS2 is used for collecting the signal change of a front-section dimmer. When the voltage on a seventeenth resistor R17 is lower than the threshold voltage of the voltage stabilizing diode TL1, the front end of an optocoupler OP1 is closed. The eighteenth resistor R18 limits the current that flows through the front end of the optocoupler OP1, and the seventh capacitor CS1 and the ninth capacitor CS3 filter the high frequency of the power supply. After the front end of the optocoupler OP1 is closed, the triode QS1 is conducted; and the current flows to the second LED lamp beads, i.e., low color temperature LEDs, through the triode QS1, so as to realize the change of the color temperature of the entire LED lamp.

The circuit of the present invention is simple and easy to realize. An LED lamp is composed of a plurality of first LED lamp beads that generate bright white light and a plurality of second LED lamp beads that generate warm color light. The lamp comprises a control circuit used for receiving a dimming input voltage signal from a dimmer switch, wherein when the dimmer switch is adjusted within the top range setting of the dimmer switch, the color temperature of the lamp is changed to provide a warm and soft light environment and ensure that the brightness of the lamp is unchanged.

The above describes the embodiments of the present invention in detail in conjunction with the drawings, but the present invention is not limited to the described embodiments. For those skilled in the art, various variations, amendments, replacements and modifications can be made to these embodiments without departing from the principle and spirit of the present invention, and still fall into the protection scope of the present invention.

## Claims

1. A control circuit with adjustable LED color temperature, **characterized in that** the control circuit with adjustable LED color temperature comprises a rectifier circuit, a filter circuit, a voltage division circuit, an optical coupling circuit, a constant current control circuit, a power supply circuit for supplying power for the constant current control circuit, an output filter circuit, a voltage stabilizing diode, an eighteenth resistor, a nineteenth resistor, a twentieth resistor, a ninth capacitor and a triode; an output end of the rectifier circuit is connected with an input end of the filter circuit; an output end of the filter circuit is divided into two paths; one path is connected with an input end of the voltage division circuit, and the other path is connected with an input end of the constant current control circuit; an output end of the voltage division circuit is connected with a positive electrode of the voltage stabilizing diode; a negative electrode of the voltage stabilizing diode is connected with an input end of the optical coupling circuit; an input end of the optical coupling circuit is connected with the eighteenth resistor and the ninth capacitor; the twentieth resistor is connected between two output ends of the optical coupling circuit; the output ends of the optical coupling circuit are also connected with the nineteenth resistor and a base electrode of the triode; an emitting electrode of the triode is connected with a negative output end of the optical coupling circuit; an output end of the constant current control circuit is connected with an input end of the output filter circuit; first LED lamp bead are connected between two output ends of the output filter circuit; and second LED lamp beads are connected between the output ends of the output filter circuit and a collecting electrode of the triode.

2. The control circuit with adjustable LED color temperature according to claim 1, **characterized in that** the filter circuit comprises a fourth capacitor, an inductor, a fifteenth resistor, a fifth capacitor, a first resistor, a second resistor and a sixth capacitor; one end of the fourth capacitor is connected with one end of the inductor and one end of the fifteenth resistor in parallel; the other end of the fourth capacitor is connected with one end of the first resistor, one end of the second resistor and one end of the sixth capacitor in parallel; the other end of the first resistor and the other end of the second resistor are simultaneously connected with one end of the fifth capacitor; the other end of the fifteenth resistor, the other end of the inductor, the other end of the fifth capacitor and the other end of the sixth capacitor are connected with the output ends of the filter circuit in parallel.

3. The control circuit with adjustable LED color temperature according to claim 1, **characterized in that** the constant current control circuit comprises a constant current control chip; a first pin of the constant current control chip is connected with the power supply circuit, one end of the twelfth resistor and one end of the third capacitor; the other end of the twelfth resistor is connected with the output filter circuit; a second pin of the constant current control chip is connected with one end of the seventh resistor; a third pin of the constant current control chip is respectively connected with a positive electrode of a first diode and one end of the second capacitor; a negative electrode of the first diode is respectively connected with one end of the fifth resistor, one end of the sixth resistor and one end of the first capacitor; the other end of the fifth resistor is connected with the input end of the constant current control circuit; a fourth pin of the constant current control chip is grounded; a fifth pin of the constant current control chip is respectively connected with one end of the ninth resistor and one end of the eleventh resistor; a sixth pin of the constant current control chip is connected with one end of the third resistor and one end of the fourth resistor in parallel; the other end of the third resistor and the other end of the fourth resistor are simultaneously grounded; and the other end of the sixth resistor, the other end of the first capacitor, the other end of the third capacitor, the other end of the seventh resistor and the other end of the second capacitor are grounded.

4. The control circuit with adjustable LED color temperature according to claim 1 or 3, **characterized in that** the power supply circuit comprises a third diode, a fourteenth resistor, a thirteenth resistor, a fourth diode and a second polar capacitor; positive electrodes of the third diode, the fourteenth resistor, the thirteenth resistor and the fourth diode are connected in sequence; a negative electrode of the fourth diode is connected with the first pin of the constant current control chip; a positive electrode of the second polar capacitor is connected between the fourteenth resistor and the thirteenth resistor; and a negative electrode of the second polar capacitor is grounded.

5. The control circuit with adjustable LED color temperature according to claim 1, **characterized in that** the output filter circuit comprises a second diode, a tenth resistor and a first polar capacitor; a negative electrode of the second diode is respectively connected with one end of the tenth resistor and the positive electrode of the first polar capacitor; and the other end of the tenth resistor and a negative electrode of the first polar capacitor are connected with the negative electrode ends of the first LED lamp beads in parallel.
